# EUROPÄISCHE PATENTSCHRIFT

(11) **EP 0 761 524 B1**
(45) Veröffentlichungstag und Bekanntmachung des Hinweises auf die Patenterteilung: **29.08.2001**
(21) Anmeldenummer: 96112117.5
(22) Anmeldetag: 26.07.1996
(51) Int. Cl.: B62D 1/20, B62D 1/19

(54) **Sicherheitslenksäule für ein Kraftfahrzeug**
Safety steering column for a vehicle
Colonne de direction de sécurité pour un véhicule

(30) Priorität: 06.09.1995 DE 19532883
(43) Veröffentlichungstag der Anmeldung: 12.03.1997
(73) Patentinhaber: Dr.Ing.h.c. F. Porsche Aktiengesellschaft, 70435 Stuttgart (DE)
(72) Erfinder: Seibel, Maximilian, 71069 Sindelfingen (DE)

(56) Entgegenhaltungen:
- WO-A-93/16907
- FR-A- 2 019 981
- JP-A- 56 157 671

## Beschreibung

Die Erfindung bezieht sich auf eine Sicherheitslenksäule für ein Kraftfahrzeug nach dem Oberbegriff des Anspruchs 1.

Aus der DE 26 12 829 A1 ist eine Lenksäule für ein Kraftfahrzeug bekannt, die zwei über eine Kupplungs-Einrichtung bei einem Crash außer Eingriff bringbare Lenkwellenteile umfaßt. Diese Lenkwellenteile sind hierzu über Kupplungszapfen in einer Einrichtung derart miteinander verbunden, daß bei einem Crash eine Verschiebung der Lenkwellenteile gegeneinander erfolgen kann.

Aus der JP-A 56-157671 ist eine Sicherheitslenksäule für eine Kraftfahrzeug bekannt geworden, bei der eine im Lenkstrang angeordnete elastische Gelenkkupplung zur Verbindung eines Lenkwellenteiles mit einem Lenkgetriebe vorgesehen ist. Diese Gelenkkupplung weist ein Anschlußteil auf, das mit einer elastischen Scheibe der Gelenkkupplung verbunden ist. Bei einem Crash wird das Anschlußteil von der elastischen Scheibe getrennt.

Schließlich zeigt die FR-A 2 019 981 eine Lenksäule mit einer am Lenkstrang angeordneten elastischen Gelenkkupplung. Die Gelenkkupplung verbindet ein Lenkwellenteil mit einem Lenkgetriebe. Innerhalb der Gelenkkupplung ist eine elastische Scheibe vorgesehen, die zueinander versetzte, sphärische Ausnehmungen aufweist. Diese Ausnehmungen nehmen kugelförmige Enden von gabelförmigen Anschlußelementen der Gelenkkupplung rastend auf.

Aufgabe der Erfindung ist es, eine Sicherheitslenksäule für ein Kraftfahrzeug zu schaffen, die bei einem Crashfall in einer Gelenkkupplung eine Trennung bzw. eine teilweise Trennung der miteinander verbundenen Lenkwellenteile gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Gelenkkupplung als bei einem Crash sich selbsttätig trennendes Teil für die Lenkwellenteile ausgebildet ist. Hierzu sind die Befestigungsbolzen mindestens eines Anschlußteils der Gelenkkupplung als ausknüpfbare Verbindung ausgebildet. Die Bolzen sind unter Vorspannung im elastischen Teil der Gelenkkupplung angeordnet, wobei sie einerseits als Verbindungselement für die Kupplung wirken und andererseits bei einem Crashfall ein Trennen der Teile der Gelenkkupplung verursachen. Dementsprechend ist die Vorspannung des elastischen Teiles zu den Bolzen ausgelegt.

Verschiedene Ausführungen der im elastischen Teil der Kupplung angeordneten Bolzenschäfte sind möglich, so ist beispielsweise ein zylindrischer Bolzenschaft, ein kantiger Bolzenschaft oder auch ein balliger Bolzenschaft möglich. Diese geformten Bolzenschäfte bewirken eine Befestigung und gleichzeitig unter Einwirkung von Crashkräften auf das Fahrzeug ein definiertes Ausknüpfen aus dem elastischen Teil der Kupplung, indem sie unter Vorspannung gehalten sind. Hierdurch können die über die Gelenkkupplung verbundenen Lenkungsteile zueinander ausknicken und die Lenksäule wird nicht in den Fahrzeuginnenraum verschoben.

Die Verbindung des weiteren Anschlußteils der Kupplung mit der elastischen Scheibe erfolgt über Befestigungsbolzen, die eine feste Verspannung zwischen der elastischen Scheibe und dem Anschlagteil gewährleisten.

Ausführungsbeispiele der Erfindung sind in der Zeichnung dargestellt und werden im folgenden näher beschrieben.

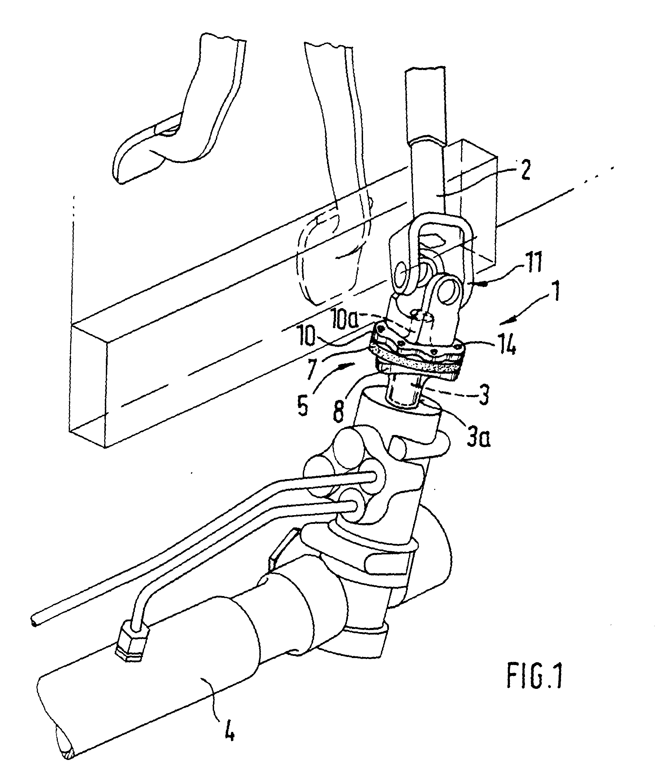

Es zeigen
- Fig. 1: eine teilweise Darstellung einer Sicherheitslenksäule mit Lenkwelle, Gelenkkupplung und einem Lenkgetriebe,
- Fig. 2: eine schaubildliche Darstellung einer Gelenkkupplung im teilweise ausgeknüpften Zustand,
- Fig. 3: die Gelenkkupplung in einem verbundenen Zustand im Schnitt,
- Fig. 4: eine Ansicht von unten auf die Gelenkkupplung und
- Fig. 5: einen Schnitt durch einen ballig geformten Bolzen der Gelenkkupplung.

Die Sicherheitslenksäule 1 weist zwischen einem Lenkwellenteil 2 und einer Ritzelwelle 3 eines Lenkgetriebes 4 eine elastische Gelenkkupplung 5 auf. Diese besteht aus einem über eine ausknüpfbare Verbindung 6 mit einer elastischen Scheibe 7 verbundenes Anschlußteil 8 und einem über Befestigungsbolzen 9 gehaltenes weiteres Anschlußteil 10. Dieses ist über einen angeformten Zapfen 10a mit dem Lenkwellenteil 2, beispielsweise unter Zwischenschaltung eines Kreuzgelenkes 11 gehalten, wobei das weitere Anschlußteil 8 über eine angeformte Hülse 3a mit der Ritzelwelle 3 verbunden wird.

Die ausknüpfbare Verbindung 6 besteht aus im Anschlußteil 8 befestigte Bolzen 12; 13, die in der elastischen Scheibe 7 mit Vorspannung gehalten sind. Ein zur elastischen Scheibe 7 überstehendes endseitiges Bolzenteil weist eine Verdickung 14 auf bzw. ist gestaucht ausgeführt, so daß ein leichtes Herausrutschen aus der elastischen Scheibe 7 nicht möglich ist.

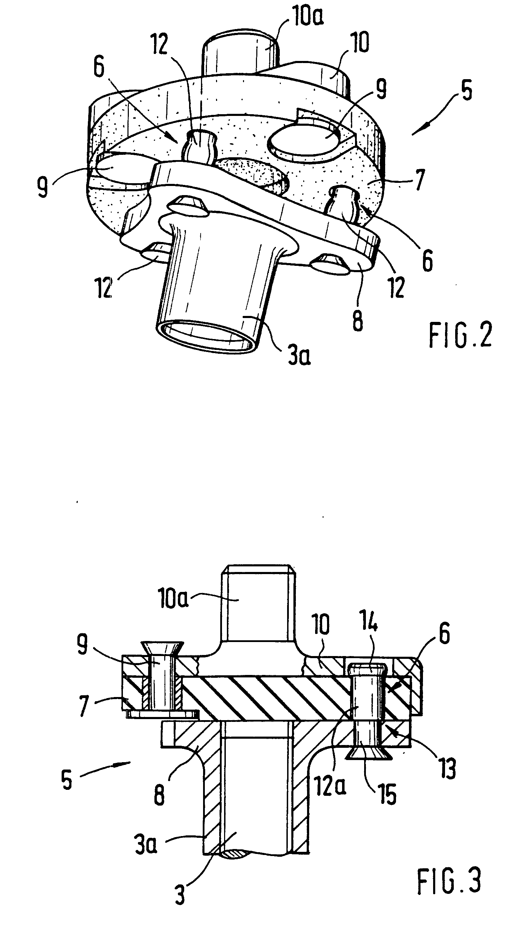

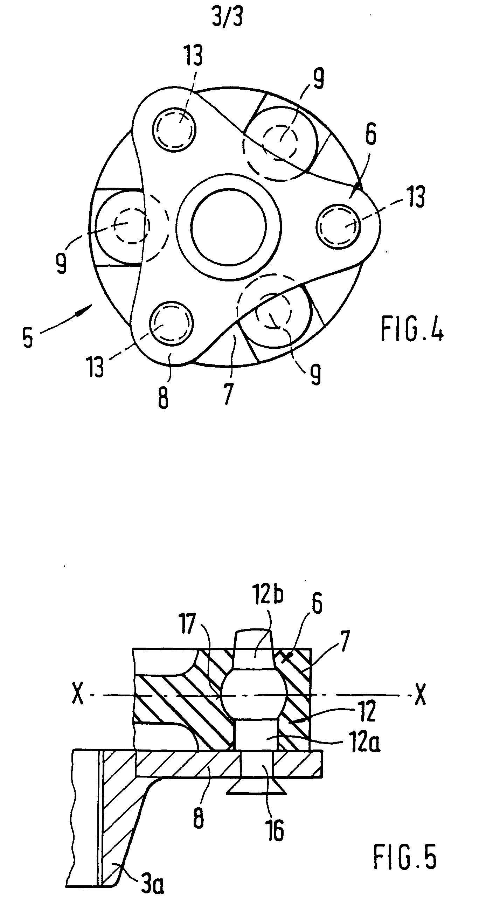

Der in der elastischen Scheibe 7 angeordnete Bereich des Bolzens 13 ist gemäß einer Ausführung (Fig. 3) durchgehend zylindrisch ausgeführt und dann endseitig mit der Verdickung 14 versehen. Nach einer weiteren Ausführung gemäß Fig. 5 ist der Bolzen 12 in diesem Bereich mit einer balligen Form 17 versehen. Dieser Formbereich ist etwa in der Mittenebene X-X der elastischen Scheibe 7 vorgesehen. An diesem balligen Bolzenbereich schließen sich beidseitig zylindrische Abschnitte 12a und 12b an.

Der dem Anschlagteil 8 zugerichtete zylindrische Abschnitt 12a des Bolzens 12 und der zylindrische Bolzen 13 weisen einen größeren Durchmesser auf, als die zugehörenden zylindrischen Abschnitte 15 und 16 des Bolzens im Anschlagteil 8.

## Patentansprüche

1. Sicherheitslenksäule für ein Kraftfahrzeug, mit einer im Lenkstrang angeordneten elastischen Gelenkkupplung zur Verbindung eines Lenkwellenteiles mit einem Ritzel eines Lenkgetriebes, **dadurch gekennzeichnet**, daß die Gelenkkupplung (5) ein Anschlußteil (8) mit einer bei einer vorbestimmten crashbedingten Belastung ausknüpfbaren Verbindung (6) in einer elastischen Scheibe (7) der Gelenkkupplung (5) aufweist, die mit einem weiteren Anschlußteil (10) fest verbunden ist.

2. Sicherheitslenksäule nach Anspruch 1, **dadurch gekennzeichnet**, daß die ausknüpfbare Verbindung (6) aus mit dem Anschlußteil (8) fest verbundenen Bolzen (12; 13) besteht, die in der elastischen Scheibe (7) mit Vorspannung gehalten sind.

3. Sicherheitslenksäule nach den Ansprüchen 1 oder 2, **dadurch gekennzeichnet**, daß die Bolzen (12; 13) in verbundenem Zustand über die elastische Scheibe (7) herausstehen und dieser Bolzenbereich eine Verdickung (14) aufweist.

4. Sicherheitslenksäule nach Anspruch 1 oder einem der vorhergehenden Ansprüche, **dadurch gekennzeichnet**, daß die in der elastischen Scheibe (7) angeordneten Bolzen (13) zylindrisch ausgeführt sind.

5. Sicherheitslenksäule nach Anspruch 1 oder einem der vorhergehenden Ansprüche, **dadurch gekennzeichnet**, daß der Bolzenschaft im Aufnahmebereich der elastischen Scheibe (7) eine ballige Form (17) aufweist, an den sich zu beiden Seiten zylindrische Abschnitte (12a, 12b) anschließen.

6. Sicherheitslenksäule nach Anspruch 1 oder einem der vorhergehenden Ansprüche, **dadurch gekennzeichnet**, daß der zylindrische Abschnitt (12a) des Bolzens (12; 13) in der elastischen Scheibe (7) einen größeren Durchmesser aufweist, als der anschließende zylindrische Bolzenabschnitt (15, 16) im Anschlußteil (8).

7. Sicherheitslenksäule nach Anspruch 1 oder einem der vorhergehenden Ansprüche, **dadurch gekennzeichnet**, daß die ausknüpfbaren Bolzen (12; 13) in der elastischen Scheibe (7) unter einer definierten Vorspannung in Abhängigkeit von Crashbelastungen gehalten sind.

## Claims

1. A safety steering column for a motor vehicle, having a resilient articulated coupling arranged in the steering train for connecting part of the steering shall to a pinion of a steering mechanism, **characterized in that** the articulated coupling (5) comprises an attachment part (8) with a connexion (6) in a resilient disc (7) of the articulated coupling (5) firmly connected to a further attachment part (10), the connexion (6) being disengageable in the event of a pre-determined loading caused by a crash.

2. A safety steering column according to Claim 1, **characterized in that** the disengageable connexion (6) comprises pins (12; 13) firmly connected to the attachment part (8) and held in the resilient disc (7) with pre-stressing.

3. A safety steering column according to Claim 1 or 2, **characterized in that** in the connected state the pins (12; 13) project beyond the resilient disc (7), and this pin region has a covering (14).

4. A safety steering column according to Claim 1 or one of the preceding Claims, **characterized in that** the pins (13) arranged in the resilient disc (7) are cylindrical.

5. A safety steering column according to Claim 1 or one of the preceding Claims, **characterized in that** within the receiving region of the resilient disc (7) the pin shank has a convex shape (17) adjoined at both ends by cylindrical portions (12a, 12b).

6. A safety steering column according to Claim 1 or one of the preceding Claims, **characterized in that** the cylindrical portion (12a) of the pin (12; 13) has a greater diameter in the resilient disc (7) than the adjoining cylindrical pin portion (15, 16) in the attachment part (8).

7. A safety steering column according to Claim 1 or one of the preceding Claims, **characterized in that** the disengageable pins (12; 13) are held in the resilient disc (7) under a defined pre-stressing as a function of crash loading.

## Revendications

1. Colonne de direction de sécurité pour un véhicule automobile, comportant un accouplement articulé élastique pour relier une partie d'arbre de direction à un pignon d'un mécanisme de direction, **caractérisée en ce que** l'accouplement articulé (5) comporte un élément de raccord (8) avec une liaison (6) qui peut être supprimée dans le cas d'une sollicitation prédéterminée due à une collision, dans un disque élastique (7) de l'accouplement articulé (5), laquelle liaison est reliée fixement à un autre élément de raccord (10).

2. Colonne de direction de sécurité selon la revendication 1, **caractérisée en ce que** la liaison (7) qui peut être supprimée est constituée de goujons (12 ; 13) qui sont reliés fixement à l'élément de raccord (8) et qui sont maintenus avec précontrainte dans le disque élastique (7).

3. Colonne de direction de sécurité selon les revendications 1 ou 2, **caractérisée en ce que** les goujons (12 ; 13) à l'état relié, dépassent du disque élastique (7) et en ce que cette zone des goujons présente une surépaisseur (14).

4. Colonne de direction de sécurité selon la revendication 1 ou l'une des revendications précédentes, **caractérisée en ce que** les goujons (13) disposés dans le disque élastique (7) sont cylindriques.

5. Colonne de direction de sécurité selon la revendication 1 ou l'une des revendications précédentes, **caractérisée en ce que** dans la zone de réception du disque élastique (5), la tige des goujons présente une forme bombée (17), à laquelle des parties cylindriques (12a, 12b) se rattachent des deux côtés.

6. Colonne de direction de sécurité selon la revendication 1 ou l'une des revendications précédentes, **caractérisée en ce que** la partie cylindrique (12a) du goujon (12 ; 13) présente, dans le disque élastique (17), un plus grand diamètre que la partie cylindrique (15, 16) du goujon qui lui fait suite, dans l'élément de raccord (8).

7. Colonne de direction de sécurité selon la revendication 1 ou l'une des revendications précédentes, **caractérisée en ce que** les goujons (12 ; 13) qui peuvent être désengagés sont maintenus dans le disque élastique (7) avec une précontrainte définie, en fonction des sollicitations résultant de la collision.
